# EUROPEAN PATENT SPECIFICATION

(11) **EP 1 683 771 B1**
(45) Date of publication and mention of the grant of the patent: **20.08.2008**
(21) Application number: 06250291.9
(22) Date of filing: 19.01.2006
(51) Int. Cl.: C04B 35/573, C04B 35/80

(54) **Method for performing silicon melt infiltration of ceramic matrix composites**
Verfahren zum Ausführen von Silizium-Schmelzinfiltration von Verbundwerkstoffen mit keramischer Matrix
Procédé de mise en oevre l'infiltration de silicium fondue des composites ayant une matrice céramique

(30) Priority: 24.01.2005 US 39814
(43) Date of publication of application: 26.07.2006
(73) Proprietor: GENERAL ELECTRIC COMPANY, Schenectady, NY 12345 (US)
(72) Inventor: Gray, Paul Edward, North East, Maryland 21901 (US)
(74) Representative: Goode, Ian Roy

(56) References cited:
- EP-A- 1 219 578
- DE-A1- 3 837 378
- US-A- 4 617 072
- US-A- 5 509 555
- ROBERT P. MESSNER & YET-MING CHIANG: "Liquid-Phase Reaction-Bonding of Silicon Carbide Using Alloyed Silicon-Molybdenum Melts" J. AM. CERAM. SOC., vol. 73, no. 5, 1990, pages 1193-1200, XP002373732

## Description

This invention relates to the manufacture of ceramic matrix composites and specifically, to a method for melt infiltrating a fiber-reinforced ceramic matrix composite (CMC) with molten silicon.

A variety of processing schemes have been developed for the fabrication of MI-CMCs. One process is known as the "prepreg process" and the other is known as the "slurry cast" process.

The first step in the "prepreg" process is the application of a fiber coating via chemical vapor deposition (CVD). The fiber coating serves to protect the fibers during composite processing and provides a low-strength fiber-matrix interface, thereby enabling fiber-matrix debonding and fiber pull-out "toughening" mechanisms. CMCs have typically in the past used carbon as the fiber coating, but have since incorporated boron nitride or silicon-doped boron nitride for increased oxidation resistance.

Following fiber coating, the fiber tow is pulled through a slurry containing the preform matrix constituents (SiC and carbon particulate, binders and solvents), and then wound on a drum to form a unidirectional pre-impregnated, i.e., "prepreg," tape. The tape is then dried, removed from the drum, cut to shape, laid-up to give the desired fiber architecture, and laminated to form a green composite preform. Machining of the preform can be done at this stage, which helps to reduce the amount of final machining of the part after densification.

The slurry casting approach differs from the prepreg approach in that the fibers are first woven or braided into a cloth, which is then laid-up to form the composite preform shape. The fiber coating is then applied to the preform using a chemical vapor infiltration (CVI) process. The remaining porosity in the preform, typically 30-40%, is then partially filled by slurry casting (or slip casting) an SiC particulate into the preform.

The final densification step in both processes is the silicon melt infiltration step. The composite preform, containing the coated SiC fibers, SiC and/or carbon particulates, and organic binders (in the prepreg process), is heated above about 1420°C. while in contact with a source of silicon metal. Molten silicon metal readily wets SiC and/or carbon, and therefore is easily pulled into the remaining porosity of the preforms by a capillary process. No external driving force is needed for the infiltration and there is no dimensional change of the composite preform.

Current processes for melt infiltration of CMC's using silicon metal utilize batch processes where either silicon metal powder is sprayed onto the surface of a part to be melt infiltrated, or silicon is transferred to the part in the molten state using a porous carbon wick. Considerable time is utilized in heating and cooling a furnace to and from the melt infiltration temperature. In addition, the time required in current batch type melt infiltration processes allows for preform attack while the preform is in contact with molten silicon. Current melt infiltration processes require about one hour exposure to the molten silicon.

In addition, current processes require minor additions of boron to the silicon to ensure wetting and complete melt penetration throughout the preform. Boron is known to cause accelerated corrosion of the Si and SiC within the preform due to high pressure water vapor in the combustion products.

EP-A-1 219 578 discloses a process for manufacturing a high purity silicon/ silicon carbide composite body formed from an assembly of fibers silicified in an atmosphere containing silicon. In US-A-4 617 072 at least two films or prepeg sheets of carbon containing material are bonded to each other, brought into the desired final form and cured. The final form is then heated while air is excluded for coking the carbon and is then enriched by metallic silicon.

In accordance with an exemplary embodiment of this invention, a fiber-reinforced CMC preform is melt-infiltrated by dipping the preform into a bath of molten silicon. In one exemplary embodiment, the parts are suspended from a graphite holder in a vacuum and/or inert atmosphere furnace. The holder and CMC preform are lowered into the molten silicon bath where the molten silicon wets the CMC preform surface and infiltrates the part. Because the dipping process substantially reduces the time required to melt infiltrate the CMC preform, the likelihood that molten silicon will attack the preform is reduced.

The process disclosed herein may be utilized in the manufacture of gas turbine engine components typically requiring high temperature resistance. The molten bath dipping technique can be utilized to improve the quality of melt-infiltrated parts. Real time weight measurements while in the bath will reduce part-to-part variability and increase overall reliability. In addition, performs can be rejected individually without rejecting entire batch furnace loads of parts.

Accordingly, in its broader aspects, the present invention relates to a method of melt infiltrating a fiber-reinforced ceramic matrix composite preform comprising (a) dipping the preform into a bath of molten Silicon; (b) leaving the preform in the bath for a predetermined time; (c) withdrawing the preform from the bath; and (d) cooling the perform. During steps (a) and (c), the preform is moved at a rate of speed of between 1.27 cm to 25.4 cm (½ and 10 inches) of preform per minute.

Embodiments of the invention will now be described, by way of example, with reference to the accompanying drawings, in which:
FIGURE 1 is a schematic diagram of a Prepreg Process for preparing CMC's; and
FIGURE 2 is a schematic diagram of a Slurry Cast process for preparing CMC's.

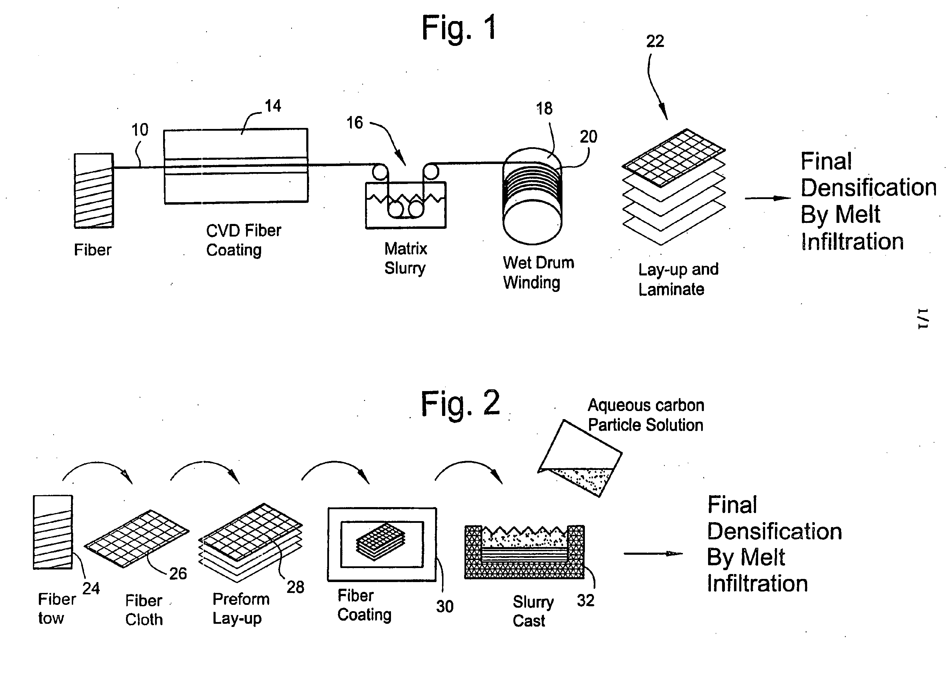

Figure 1 is a schematic diagram of a conventional prepreg process used in the manufacture of ceramic matrix composites. After the fiber tow 10 is wound from a drum 12, it passes through a vessel 14 where a ceramic fiber coating is applied to the toe via a known chemical vapor deposition (CVD) process. This coating serves to protect the fibers during composite processing and provides a low strength fiber-matrix interface, thereby enabling the fiber matrix debonding and fiber pull-out "toughening" mechanisms. CMC's typically in the past used carbon as the fiber coating, but have since incorporated boron nitride or silicon-doped boron nitride for increased oxidation resistance. Following fiber coating, the fiber tow 10 is pulled through a vessel 16 containing a slurry including the preform matrix constituents (SiC and carbon particulate, binders and solvents), and then wound on a drum 18 to form a unidirectional pre-impregnated, i.e., "pre-preg," tape 20. The tape is then dried, removed from the drum, cut to shape, laid-up to give the desired fiber architecture and laminated to form a green composite preform 22. Machining of the preform can be done at this stage, which helps to reduce the amount of final machining of the part after final densification.

With reference to Figure 2, and in connection with the slurry cast process, the fiber tow 24 is wound or braided into a fiber cloth 26. The cloth is cut and laid-up to form the composite preform 28 of the desired shape. The preform is then placed within a chamber 30 where fiber coatings are applied to the preform using a chemical vapor infiltration (CVI) process. The remaining porosity in the preform, typically 30-40% is then partially filled by slurry casting or slip casting an SiC particulate into the preform in the vessel 32.

The final densification step in both processes is a silicon melt infiltration step. The composite preform, containing the coated SiC fibers, SiC and/or carbon particulates, and organic binders in the prepreg case, is heated above about 1420°C while in contact with a source of silicon metal. Molten silicon metal readily wets SiC and/or carbon, and therefore is easily pulled into the remaining porosity of the preforms by a capillary process. No external driving force is needed for the infiltration and there is no dimensional change of the composite preform.

In accordance with an exemplary embodiment of the invention, a fiber-reinforced CMC preform, partially densified by a conventional chemical vapor infiltration (CVI) process, is dipped into, for example, a modified silicon crystal growing furnace. Specifically, the preform may be suspended from a molybdenum chuck in a graphite holder. The pool of molten silicon is maintained at about 1450°C. The preform is lowered into the pool of molten Si and allowed to remain there for a predetermined time, for example, between about 2 and about 10 minutes. The melt infiltrated preform is then withdrawn from the bath and allowed to cool for 2 to 3 minutes directly above the melt surface. Subsequently, the preform is lifted into an airlock chamber which is closed and backfilled with argon. When the CMC has cooled below 500°C., it is withdrawn. It has been found that the speed with which the preform is dipped into and pulled out of the bath is of some significance. For example, with direct immersion at a normal speed of 127 to 152.4 cm/minute (50 to 60 inches/min.), undesirable gas evolution and frothing or foaming takes place. However, when the normal speed is slowed to 1.27cm to 25.4cm/minute (½ to 10 inches/min.), the preform has considerably more time to heat up and to expel residual gases before the silicon wets into the preform.

The crystal growing furnace may be heated by electrical resistance elements, induction or direct electrical heating to raise the temperature of the silicon bath. While a silicon crystal growing furnace has proven to be a suitable furnace for use with this invention, other furnaces with similar capabilities may also be used.

The process described above reduces the current melt infiltration process time from about one hour to about 2 to about 10 minutes. Moreover, no addition of boron to the silicon to ensure wetting is required.

Alternatively, the CMC preform can be suspended from a load cell within the furnace in order that the preform weight can be monitored. This weight measurement may be used to determine when the end point of the melt infiltration process is achieved. This technique would also result in a large energy savings over the current batch technique, as well as a higher part throughput. Real time part weight measurements while in the bath also reduces part-to-part variability and increases overall quality. Preforms can be easily rejected individually without rejecting the entire batch furnace loads of parts. Further, as already noted, boron additions to the silicon may be eliminated, therefore increasing the environmental durability of the CMC.

It will be understood that other techniques enabling the dipping of the preform into a molten silicon bath may be employed, and the invention is not limited to the furnace arrangement described herein.

## Claims

1. A method of melt infiltrating a fiber-reinforced ceramic matrix composite preform (22 or 28) comprising:
(a) dipping the preform into a bath of molten Silicon;
(b) leaving the preform in the bath for a predetermined time;
(c) withdrawing the preform from the bath; and
(d) cooling the preform;
**characterised in that**:
during steps (a) and (c), the preform is moved at a speed of between 1.27 cm to 25.4 cm (½ and 10 inches) of preform per minute.

2. The method of claim 1 wherein said molten bath is maintained at a temperature of about 1450°C.

3. The method of claim 1 wherein step (d) is carried out in an airlock chamber.

4. The method of claim 1 wherein, during step (d), the chamber is filled with gas.

5. The method of claim 4 wherein said gas is argon.

6. The method of claim 1 wherein during step (a), said preform is suspended from a load cell to thereby measure weight of said preform.

7. The method of claim 1 wherein, during step (b), the preform remains in the bath for between about 2 and about 10 minutes.

8. A method of forming a ceramic matrix composite comprising:
(a) applying a fiber coating to a fiber tow (10);
(b) pulling the fiber tow through an aqueous slurry composed of high and low temperature binders, silicon carbide powder, carbon black and water; to thereby form a prepreg tape (20);
(c) winding the prepreg tape (20) on a drum (18).
(d) cutting, laying up and laminating the prepreg tape to form a composite preform (22); and
(e) melt infiltrating the preform by the method according to claim 1.

9. The method of claim 8 wherein said molten bath is maintained at a temperature of about 1450°C.

## Patentansprüche

1. Verfahren zur Schmelzinfiltration einer faserverstärkten Keramikmatrix-Verbundwerkstoff-Vorform (22 oder 28), mit den Schritten:
(a) Eintauchen der Vorform in ein Bad aus geschmolzenem Silizium;
(b) Belassen der Vorform in dem Bad für eine vorbestimmte Zeit;
(c) Entfernen der Vorform aus dem Bad; und
(d) Kühlen der Vorform;
**dadurch gekennzeichnet; dass**:
während den Schritten (a) und (c) die Vorform mit einer Geschwindigkeit zwischen 1,27 cm bis 5,24 cm (1/2 bis 10 inches) pro Minute bewegt wird.

2. Verfahren nach Anspruch 1, wobei das Schmelzbad auf einer Temperatur von etwa 1450 °C gehalten wird.

3. Verfahren nach Anspruch 1, wobei der Schritt (d) in einer Luftschleusenkammer, ausgeführt wird.

4. Verfahren nach Anspruch 1, wobei während des Schrittes (d) die Kammer mit Gas gefüllt ist.

5. Verfahren nach Anspruch 1, wobei das Gas Argon ist.

6. Verfahren nach Anspruch 1, wobei während des Schrittes (a) die Vorform an einer Wägezelle aufgehängt ist, um das Gewicht der Vorform zu messen.

7. Verfahren nach Anspruch 1, wobei während des Schrittes (b) die Vorform zwischen etwa 2 und etwa 10 Minuten in dem Bad verbleibt.

8. Verfahren zum Herstellen eines Keramikmatrix-Verbundwerkstoffes, mit den Schritten:
(a) Aufbringen einer Faserbeschichtung auf ein Faserspinnkabel (10);
(b) Ziehen des Faserspinnkabels durch einen aus Hoch- und Niedertemperaturbindern, Siliziumkarbidpulver, Ruß und Wasser bestehenden wässrigen Brei, um **dadurch** ein Prepreg-Band (20) zu erzeugen;
(c) Aufwickeln des Prepreg-Bandes (20) auf eine Trommel (18) .
(d) Zuschneiden, Auflegen und Laminieren des Prepreg-Bandes, um eine Verbundwerkstoff-Vorform (22) zu erzeugen; und
(e) Schmelzinfiltrieren der Vorform durch das Verfahren gemäß Anspruch 1.

9. Verfahren nach Anspruch 8, wobei das Schmelzbad auf einer Temperatur von etwa 1450 °C gehalten wird.

## Revendications

1. Procédé d'imprégnation en fusion d'une préforme composite à matrice céramique renforcée par fibre (22 ou 28) comprenant :
(a) le trempage de la préforme dans un bain de silicium fondu ;
(b) le maintien de la préforme dans le bain pendant une durée prédéterminée ;
(c) le retrait de la préforme du bain ; et
(d) le refroidissement de la préforme ;
**caractérisé en ce que** :
au cours des étapes (a) et (c), la préforme est déplacée à une vitesse comprise entre 1,27 cm et 25,4 cm (1/2 et 10 pouces) de la préforme par minute.

2. Procédé selon la revendication 1, dans lequel ledit bain en fusion est maintenu à une température de 1450°C environ.

3. Procédé selon la revendication 1, dans lequel ladite étape (d) est mise en oeuvre dans une chambre isolée de l'air.

4. Procédé selon la revendication 1, dans lequel, au cours de l'étape (d), la chambre est remplie de gaz.

5. Procédé selon la revendication 4, dans lequel ledit gaz est de l'argon.

6. Procédé selon la revendication 1, dans lequel, au cours de l'étape (a), ladite préforme est suspendue sur une cellule de charge afin de mesurer ainsi le poids de ladite préforme.

7. Procédé selon la revendication 1, dans lequel, au cours de l'étape (b), la préforme reste dans le bain entre 2 environ et 10 minutes environ.

8. Procédé de formation d'un composite à matrice céramique comprenant :
(a) l'application d'un revêtement de fibre sur une mèche de fibre (10) ;
(b) l'entraînement de la mèche de fibre à travers une pâte aqueuse composée de liants à haute et basse température, de poudre de carbure de silicium, de noir de carbone et d'eau ; afin de former ainsi une bande préimprégnée (20) ;
(c) l'enroulement de la bande préimprégnée (20) sur un tambour (18).
(d) la découpe, la pose et le laminage de la bande préimprégnée afin de former une préforme composite (22) ; et
(e) l'imprégnation en fusion de la préforme par le procédé selon la revendication 1.

9. Procédé selon la revendication 8, dans lequel ledit bain en fusion est maintenu à une température de 1450°C environ.
